Europäisches Patentamt

European Patent Office

Office européen des brevets

(19)

(11) Numéro de publication : **0 064 439**
**B1**

(12) **FASCICULE DE BREVET EUROPÉEN**

(45) Date de publication du fascicule du brevet :
19.12.84

(51) Int. Cl.³ : **G 01 C 21/22**

(21) Numéro de dépôt : **82400696.9**

(22) Date de dépôt : **16.04.82**

(54) **Indicateur cartographique à enregistrement sur film photographique.**

(30) Priorité : **27.04.81 FR 8108346**

(43) Date de publication de la demande :
**10.11.82 Bulletin 82/45**

(45) Mention de la délivrance du brevet :
**19.12.84 Bulletin 84/51**

(84) Etats contractants désignés :
**DE GB IT NL SE**

(56) Documents cités :
**WO-A-79 /001 75**
**FR-A- 2 357 022**

(73) Titulaire : **THOMSON-CSF**
**173, Boulevard Haussmann**
**F-75379 Paris Cedex 08 (FR)**

(72) Inventeur : **Reymond, Jean-Claude**
**THOMSON-CSF SCPI 173, bld Haussmann**
**F-75379 Paris Cedex 08 (FR)**
Inventeur : **Bertrand, Gilles**
**THOMSON-CSF SCPI 173, bld Haussmann**
**F-75379 Paris Cedex 08 (FR)**
Inventeur : **Gabanou, Roland**
**THOMSON-CSF SCPI 173, bld Haussmann**
**F-75379 Paris Cedex 08 (FR)**

(74) Mandataire : **Trocellier, Roger et al**
**THOMSON-CSF SCPI 173, Bld Haussmann**
**F-75379 Paris Cedex 08 (FR)**

Jouve, 18, rue St-Denis, 75001 Paris, France

## Description

La présente invention concerne un indicateur cartographique à enregistrement de carte sur un film photographique agencé selon le préambule de la revendication 1.

Les indicateurs cartographiques en question servent à visualiser une carte géographique mobile à bord de véhicule et ils sont utilisés en particulier pour la navigation aérienne. Dans ce concept, l'image de carte visualisée sur un indicateur cathodique représente la zone survolée; à cette carte se rajoutent, généralement, des symboles et inscriptions relatifs à des paramètres de navigation et à la position avion. L'image visualisée doit se déplacer comme le sol sous le mobile et son positionnement doit donc être asservi en x, en y et en θ, correspondant respectivement aux données longitude, latitude et cap de l'avion, ces données étant fournies par le système de navigation qui équipe le véhicule. L'indicateur cartographique comporte un calculateur qui élabore, à partir de ces données, des signaux de commande d'asservissement de position de l'image en x, y et θ.

Il est connu par la demande de brevet français n° 2.357.022, un indicateur cartographique qui comporte : la carte enregistrée sur un film photo supporté par des bobines, un lecteur vidéo d'images selon un balayage ligne par ligne, des moyens d'asservissement de l'image en fonction de la latitude, la longitude et le cap, et des circuits d'exploitation des signaux vidéo de lecture. Le lecteur vidéo comporte, soit une source lumineuse et une caméra de télévision, soit un tube d'analyse à spot mobile (flying spot) et un photodétecteur (photomultiplicateur ou autre), des éléments optiques de transport d'image et de focalisation, et un générateur des signaux de balayage de la caméra ou du tube flying-spot. Dans le cas d'un film couleur, il faut rajouter un séparateur optique trichrome et trois photodétecteurs ou caméras de prise de vues au lieu d'un élément.

Le calculateur de bord élabore : en fonction du cap θ, les corrections de tensions de balayage pour faire tourner l'image d'une quantité correspondante ; en fonction de la latitude y, une commande d'asservissement de position du film par rotation des bobines ; et en fonction de la longitude x, une commande d'asservissement de position d'un miroir assurant, par déflexion optique du rayonnement lumineux émis par la source ou le spot mobile, le déplacement correspondant de l'image balayée. Les circuits d'exploitation comportent un moniteur TV précédé de circuits pour le mélange vidéo avec les signaux de symbologie, ou pour effectuer un traitement désiré, ou encore des commutations de voies vidéo locales.

Le but de l'invention est de réaliser le mouvement en x par des moyens purement électroniques et donc statiques, de manière à éviter les inconvénients divers liés à des solutions électromécaniques nécessitant le déplacement de pièces mécaniques, miroir ou autre. Ces inconvénients portent sur l'encombrement et le poids trop élevés, une fragilité éventuelle, une constante de temps de réponse et, surtout sur une précision limitée, et une sensibilité aux accélérations.

Dans un même esprit d'accroissement de la précision, ce but de l'invention implique de réaliser le mouvement longitudinal (en y) d'une façon particulière, en comportant un recalage fin asservi aux variations de la latitude.

Selon l'invention, le but susmentionné est atteint par les moyens figurant dans la partie caractérisante de la revendication 1.

Des particularités de l'invention apparaîtront dans la description qui suit donnée à titre d'exemple non limitatif, à l'aide des figures annexées qui représentent :

Figure 1, un diagramme général d'un indicateur cartographique conforme à la présente invention ;

Figure 2, un schéma montrant, sur une portion de film notamment, un dimensionnement possible de l'image utile à visualiser ;

Figure 3, un schéma illustrant les mouvements de la zone utile en fonction de la longitude et du cap ;

Figure 4, des formes d'ondes relatives au balayage des perforations latérales ;

Figure 5, un mode possible de découpe de la carte en un enregistrement sur film ;

Figures 6, 7 et 8, des images-test pour l'initialisation du positionnement, des contrôles intermédiaires et le contrôle de linéarité, respectivement.

L'indicateur cartographique doit lire la position de film correspondant à l'image de la carte géographique à visualiser. Pour obtenir ce résultat, les moyens mis en œuvre permettent :

— le déplacement dans le sens transversal (en x) de l'information qui représente le mouvement en longitude du véhicule ;

— le déplacement dans le sens longitudinal (en y) pour représenter, de même, le mouvement en latitude ;

— et généralement aussi, la rotation de l'image sur elle-même (en θ) pour tenir compte du cap suivi ;

— en outre, subsidiairement, il est prévu le recalage du spot d'analyse et un contrôle de linéarité grâce à la lecture d'images test.

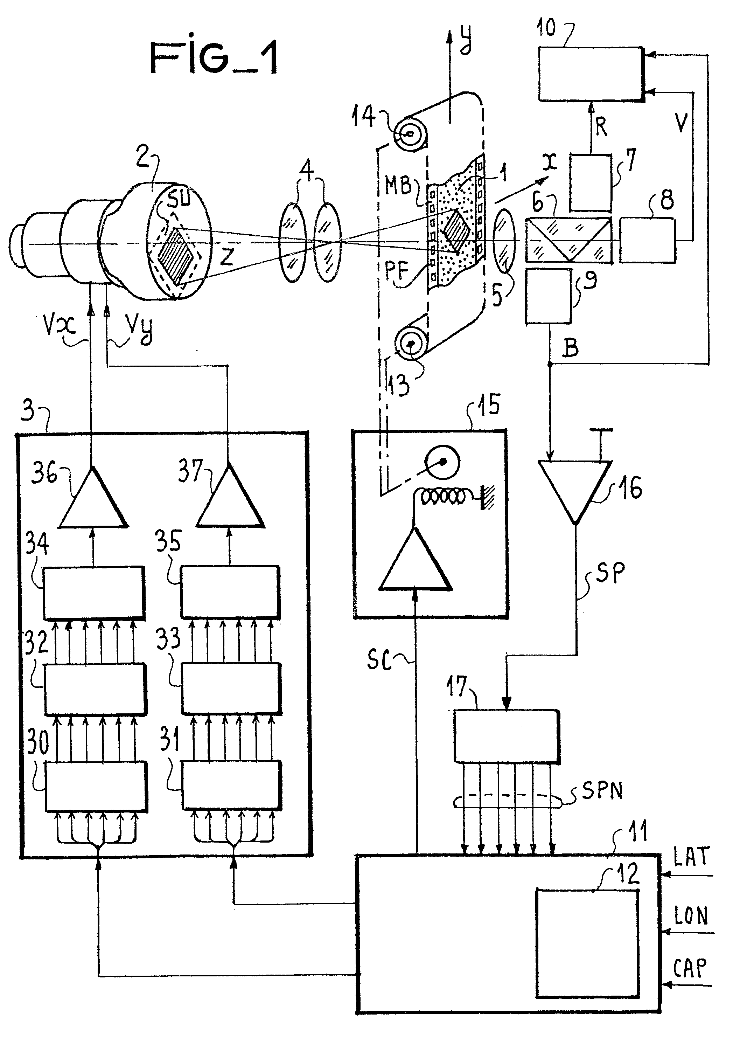

La figure 1 représente un mode de réalisation possible de l'indicateur cartographique selon l'invention.

Le lecteur vidéo à la partie supérieure comporte le film 1 portant l'enregistrement photographique de la carte géographique. La source de lumière est le spot d'un tube 2 du type flying-spot. Ce tube est à luminance élevée et le spot est de très petit diamètre, de l'ordre d'une dizaine de microns. Le balayage est du type ligne par ligne, les signaux de déflexion correspondants étant délivrés par un générateur de balayage 3. Un objectif optique 4 forme l'image de la face avant du tube 2 sur le film 1. La lumière émise par le spot est modulée par la transparence du film lors de la traversée du film et est reprise par un condenseur 5 qui la canalise vers l'entrée d'un séparateur trichrome 6 dans le cas considéré d'un film en couleur ; les trois voies rouge R, vert V, bleu B sont détectées par les éléments 7, 8 et 9, tels des photomultiplicateurs par exemple, pour produire les signaux vidéo destinés à l'exploitation en 10 et la visualisation couleur.

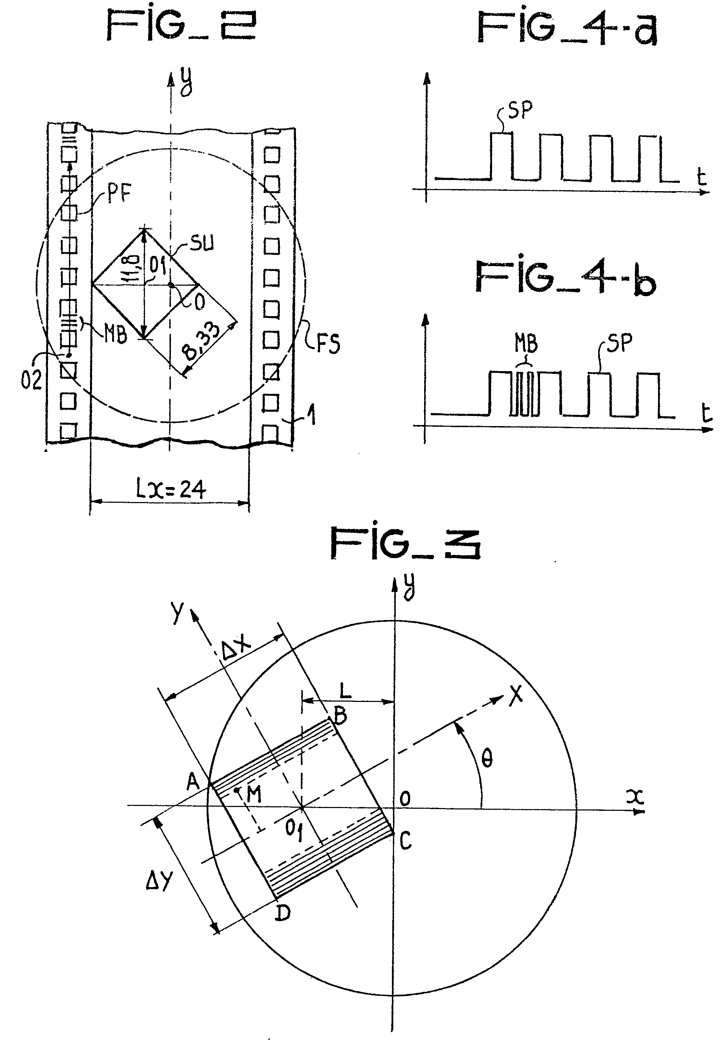

L'objectif 4 est tel que l'image FS de toute la face avant du tube 2 recouvre toute la largeur du film à analyser, comme le montre la figure 2. En réalité, on veut afficher sur l'écran de visualisation que l'information contenue dans une surface utile SU de forme rectangulaire, carrée ou autre, et dont les dimensions sont nettement inférieures à la largeur Lx de l'enregistrement sur le film. Cette surface utile SU correspond à l'image à visualiser. Grâce à une commande appropriée des balayages en x et en y du tube d'analyse, on peut avoir accès à tout point du film dans la zone utile SU. Cette commande est produite à l'aide d'un calculateur ou processeur 11 programmé à cet effet, qui reçoit les paramètres latitude LAT, longitude LON et cap CAP, et qui commande, à partir de ces données, le générateur de balayage 3. Le détail de cette commande est exposé dans ce qui suit à l'aide, notamment, de la Figure 3. L'aire ABCD représente la portion utile SU de film à balayer. Le système d'axe Oy, Ox est constitué par la direction médiane Oy longitudinale du film passant par le milieu de celui-ci à égale distance des perforations PF latérales, et par la direction orthogonale Ox passant par le centre O1 de la surface utile ABCD. Soit L la distance OO1, le point O correspond à l'image du centre électrique du tube FS. La zone ABCD a subi une rotation d'angle par rapport à Ox. On appelle M le point courant de balayage obtenu par des tensions Vx et Vy adéquates appliquées au tube, et X et Y les coordonnées de M par rapport au système d'axes cartésiens O1X, O1Y passant par O1 et présentant la rotation θ. Le passage d'un système d'axe à l'autre résulte de cette rotation θ et de la translation OO1 de valeur absolue L. Les coordonnées x, y de M dans le système Oxy sont donc données par les relations connues :

$$x = X \cos \theta - Y \sin \theta - L$$
$$y = X \sin \theta + Y \cos \theta$$

Le calculateur 11 peut être réalisé à partir d'un microprocesseur ; il détermine à tout moment les valeurs x et y des points M successifs à balayer dans l'aire ABCD selon un balayage ligne par ligne. Il est ainsi tenu compte du cap (rotation θ) et de la longitude (distance OO1). En ce qui concerne la latitude (position de O selon l'axe longitudinal médian y), l'action s'effectue par le positionnement longitudinal du film.

Les données x, y des points M successifs du balayage sont élaborées par le calculateur 11 qui les transmet à un circuit de balayage 3 où s'effectue notamment la conversion en signaux analogiques de sortie Vx et Vy à transmettre aux organes de déflexion du tube 2. Le circuit de balayage 3 peut comporter, comme représenté, des registres à bascule 30 et 31 recevant les données x, y numériques de M, des mémoires tampons 32 et 33 où ces données sont transférées, constituant respectivement l'adresse en x et celle en y du balayage, les circuits de conversion numérique-analogique 34 et 35 et des amplificateurs de puissance 36 et 37. Le calculateur 11 comporte une mémoire 12 dont une partie peut être utilisée pour stocker les informations x, y de balayage et en assurer ensuite le rafraîchissement en fonction de l'évolution des trois paramètres d'entrée.

On a ainsi réalisé un calage électronique à la fois en x et en θ de l'image ne mettant en œuvre aucune pièce mécanique.

Pour le positionnement en y, le film 1 est déplacé par enroulement sur les bobines support 13 et 14. Le calculateur 11 élabore la commande SC d'un asservissement de position 15 à partir de la latitude LAT et de la recopie de position du film. Celle-ci est obtenue de façon particulière et très précise en utilisant les perforations latérales PF du film. Les perforations d'un film font l'objet de soins particuliers d'exécution avec une très grande précision ; elles peuvent ainsi servir de repères à la prise de vue grâce à un dispositif de positionnement, ce qui annule les défauts dus aux tolérances elles-mêmes. Dans ce but, le calculateur 11 commande périodiquement le générateur de balayage 3 pour faire parcourir au spot une droite de direction y sensiblement positionnée vers le milieu d'une rangée latérale de perforations PF, comme indiqué sur la figure 2. Ce balayage particulier est commandé au cours d'un intervalle de temps disponible, par exemple au cours de la suppression de trame. Le signal correspondant est prélevé sur l'une des voies vidéo (ou la voie unique dans le cas d'une analyse monochrome) et est appliqué à un circuit de remise en forme tel un détecteur à seuil 16 pour éliminer le bruit et rendre les transitions brutales, par exemple un comparateur à seuil à sortie binaire. Le signal résultant SP a la forme indiquée sur la figure 4a, chaque impulsion correspondant à une perforation. Le point O2 de départ de ce balayage particulier a une position bien définie en x et en y par rapport au centre O de l'image du tube sur le film. La droite de direction y balayée sur une longueur déterminée à partir du point O2 parcourt d'une part un certain nombre de perforations latérales PF donnant naissance aux impulsions de la figure 4A et d'autre part des inscriptions codées MB portées sous forme de transparences par le film dans des espaces entre des perforations ; le signal résultant représenté sur la figure 4b correspond à l'exemple de la figure 2. Les inscriptions MB sont produites lors de l'enregistrement de la carte en relation avec celui-ci, pour identifier la localisation en y des images successives enregistrées et permettre en quelque sorte une numérotation. Le mot numérique SP obtenu en sortie du détecteur à seuil 16 est transmis au calculateur 11 grâce à un circuit d'interface 17 qui comporte notamment un registre à décalage constituant une mémoire tampon, côté sortie vers le calculateur. Les autres circuits du bloc 17, qui constitue un circuit adaptateur pour communication asynchrone, sont destinés à préserver l'information SP constituée d'impulsions de différentes largeurs (figure 4b) pour sa mise en mémoire de transfert.

Le fonctionnement est le suivant : le microprocesseur 11 détermine à partir des informations de position avion, notamment de la latitude, la valeur de consigne du positionnement en y du film que le spot doit lire lors du balayage latéral ; il calcule avec précision, en grandeur et en signe, la différence entre cette valeur de consigne et celle SP effectivement lue. La différence constitue, après conversion analogique, le signal d'erreur de positionnement SC qui va commander l'asservissement 15. Celui-ci comporte des moyens amplificateurs de puissance pour commander un dispositif servo-moteur qui va alimenter les bobines 13, 14 dans le sens désiré jusqu'à stabilisation de la boucle, c'est-à-dire jusqu'à annulation de l'erreur SC. Le montage permet ainsi de produire de manière continue et quasi instantanée le calage fin en y du film 1. On pourra coder chaque intervalle entre perforation avec des transparences MB, ou un intervalle sur deux ou encore moins ; l'essentiel est de lire une information MB au cours d'un balayage latéral quelconque, autrement dit l'espacement des inscriptions MB est fonction de l'amplitude en y du balayage latéral.

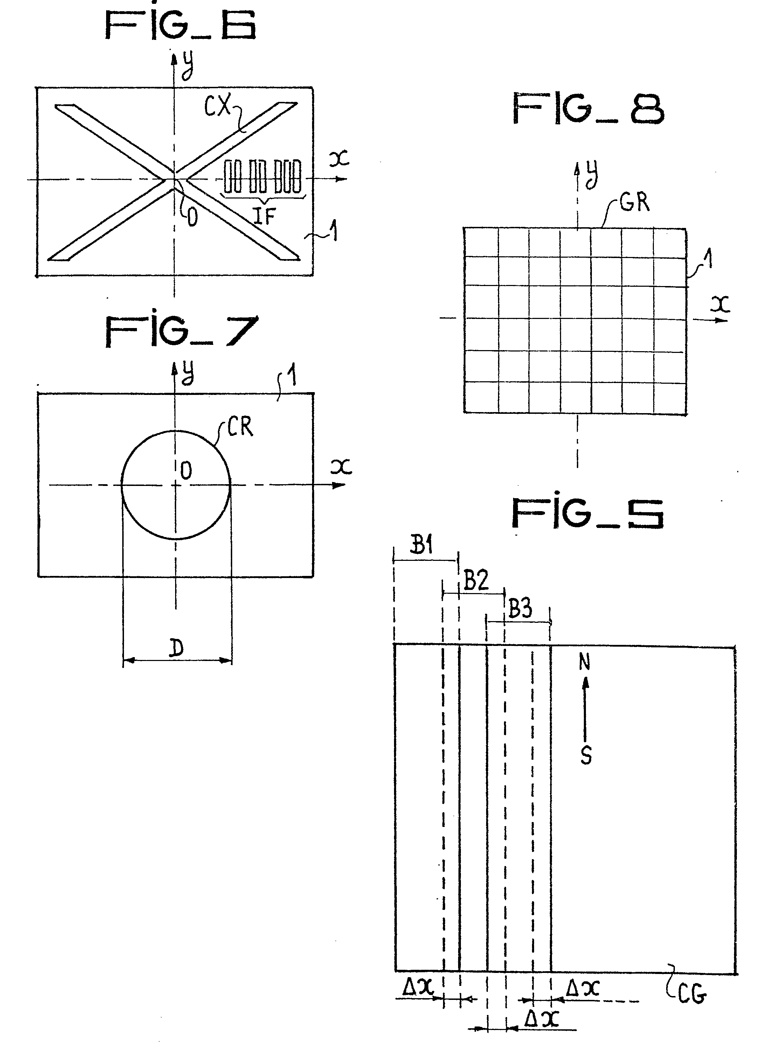

L'organisation du film support de carte peut être du type représenté sur la figure 5. La carte géographique à enregistrer CG est virtuellement découpée en bandes parallèles B1, B2, B3, chacune faisant l'objet d'une plage photographique. Pour des raisons de normalisation, la carte est, en général, présentée avec le NORD en haut. De façon à éviter que le point représentatif ne sorte de la carte, les plages chevauchent la quantité Δx. Le document ainsi constitué permet une présentation pratiquement continue de toute route, quelle que soit sa direction géographique.

La dimension transversale d'image peut être choisie pour correspondre sensiblement à la largeur Δx de chevauchement des bandes. Dans une réalisation envisageable selon la figure 2, le format de présentation est carré, l'image visualisée mesure 125 × 125 mm et le grandissement équivalent du système vaut 15, d'où la largeur Δx = 8,33 mm, soit un peu plus du tiers de la largeur de l'image standard (24 mm) sur un film de 35 mm. Comme l'indicateur cartographique effectue aussi les rotations d'image, il doit être capable de lire, dans la plus grande hauteur, donc parallèlement à la direction principale du film, une plage de largeur au moins égale à 8,33 × √2, soit 11,8 mm, correspondant à la diagonale de l'image présentée. (Ce cas se présente lorsque la carte doit être présentée NW ou NE ou SW ou SE en haut.)

Lors du passage d'une bande à la suivante, nécessité par l'évolution du véhicule, le film doit subir un déplacement important en y (saut de bandes) dans les conditions d'enregistrement précitées.

Pendant ces phases de mouvement rapide du film correspondant à un calage gros en y, le spot est maintenu immobile au point O2 et le microprocesseur compte les transitions dues aux perforations PF (impulsions larges du signal SP). Le processeur 11 reçoit du système de navigation l'information de latitude et, en comparant les deux grandeurs, commande les servo-moteurs 15 du mouvement en y du film jusqu'à la position désirée avec une précision égale au pas des perforations ; puis il est procédé au calage fin, comme il a été décrit précédemment.

Le réglage initial de l'indicateur cartographique peut être produit à l'aide d'une vue test portée par le film, du type représenté sur la figure 6. La croix CX est centrée sur le film lors de l'enregistrement et symétrique par rapport aux directions x ou y. Le calculateur 11 commande un balayage ligne par ligne en x du spot sur toute la largeur du film ; le signal SP détecté par le circuit 16 est utilisé par le calculateur pour déterminer le centre de la croix et, consécutivement, les directions ox,oy initiales. La vue peut comporter, en outre, des informations codées 1F sous forme de transparences réparties selon une direction transversale pour indiquer : la coordonnée chiffrée du centre O de la croix, le numéro du film, l'identification des documents filmés, etc.

Les types d'images répondant à l'initialisation du positionnement sont très divers. On pourra faire appel, pour des recalages intermédiaires, à des images plus simples du type figure 7, où l'information géographique donnée par le centre du cercle CR se calcule par la moyenne, et où l'information de repérage est donnée sous forme analogique par le diamètre du cercle, par exemple variable d'une image à la suivante.

La lecture de l'image test, par exemple la croix de la figure 6, la détermination de la valeur du centre et sa mise en mémoire, constituent le repérage du spot en x et servent au recalage éventuel du dispositif de balayage.

Dans les parties du film où la précision de positionnement est la plus importante, on intercale chaque zone filmée à une image test permettant le recalage et la numérotation des zones. Ainsi, à chaque changement de zone, le dispositif peut être recalé ; il peut l'être aussi périodiquement, lorsque le système travaille sur la même zone pendant un temps trop long en accédant à l'image test la plus proche.

Pour les corrections de linéarité, le film pourra comporter une ou plusieurs images test, par exemple sous forme d'une grille GR représentée sur la figure 8. Les valeurs de signaux de balayage correspondant aux transmissions détectées par le lecteur sont introduites dans la mémoire du calculateur, et ces valeurs permettent une correction de linéarité de l'ensemble de la chaîne de lecture ; cette correction sera d'autant meilleure que le nombre de lignes tracées est plus grand.

## Revendications

1. Indicateur cartographique à enregistrement de carte sur un film photographique (1) muni de perforations latérales et supporté par des bobines (13-14), comportant un lecteur vidéo d'image (2 à 9) selon un balayage ligne par ligne, un calculateur (11) élaborant, à partir des paramètres cap, longitude et latitude du véhicule porteur de l'indicateur, des données d'asservissement de position de l'image de film à visualiser pour commander une correction des signaux de balayage en fonction du cap, ainsi qu'un asservissement de position en y (15) du film selon la direction longitudinale par rotation des bobines en fonction de la latitude et des circuits d'exploitation comprenant un indicateur cathodique, le calculateur (11) élaborant les données de balayage qui tiennent compte à la fois de la rotation (θ) due au cap et des translations en x transverses au film à produire en fonction de la longitude caractérisé en ce que le film (1) comporte des inscriptions codées (MB) entre les perforations latérales (PF), ledit calculateur (11) commandant en outre un balayage périodique en y à l'endroit des perforations latérales (PF) en sorte de produire l'information de position longitudinale et permettre le calcul de la donnée de recalage en y (SC) à transmettre à l'asservissement.

2. Indicateur cartographique selon la revendication 1, caractérisé en ce que les inscriptions codées (MB) le sont sous forme de transparences enregistrées entre les perforations (PF) pour former après détection vidéo du balayage latéral un mot numérique (SP) identifiant le positionnement précis en y du film.

3. Indicateur cartographique selon la revendication 2, caractérisé en ce que le lecteur vidéo comporte au moins une voie détectrice (9) connectée à un détecteur à seuil (16) à sortie numérique, lequel est connecté via un circuit interface à mémoire tampon (17) au calculateur (11) pour la transmission dudit mot de fonctionnement en y (SP), le calculateur déterminant en fonction de la latitude la donnée de positionnement vraie en y et calculant la différence en grandeur et en signe qui constitue ladite donnée de recalage (SC) appliquée à l'asservissement (15) après conversion analogique.

4. Indicateur cartographique selon l'une quelconque des revendications précédentes, caractérisé en ce que le générateur de balayage comporte une voie en x et une voie en y composée chacune d'un registre à bascule (30, 31) en série avec un mémoire tampon (32, 33) suivie d'un convertisseur numérique-analogique (34, 35) qui alimente un amplificateur terminal (36, 37).

5. Indicateur cartographique selon l'une quelconque des revendications précédentes, caractérisé en ce qu'il comporte, en outre, des moyens de recalage du spot d'analyse par lecture d'images test portées par le film.

6. Indicateur cartographique selon la revendication 5, caractérisé en ce que les images de test comportent une croix centrée sur le film et symétrique par rapport à la direction médiane y longitudinale du film.

7. Indicateur cartographique selon la revendication 5, caractérisé en ce que les images test comportent un cercle centré sur le film sur l'axe médian longitudinal.

8. Indicateur cartographique selon l'une quelconque des revendications précédentes, caractérisé en ce qu'il comporte, en outre, des moyens de contrôle de linéarité du lecteur vidéo par lecture d'images test portées par le film.

9. Indicateur cartographique selon la revendication 8, caractérisé en ce que les moyens de contrôle de linéarité comportent des images test représentant des grilles.

10. Indicateur cartographique selon l'une quelconque des revendications précédentes, caractérisé en ce que le film comporte la carte enregistrée sous forme d'images résultant d'une découpe en bandes parallèles (B1, B2, B3) de la carte selon une direction de référence (NORD) avec chevauchement partiel (Δx) selon leur direction transversale.

11. Indicateur cartographique selon la revendication 10, caractérisé en ce que la direction y de défilement du film correspond à ladite direction de référence des bandes enregistrées, l'image balayée sur le film ayant une largeur (Δx) égale à ladite valeur (Δx) de chevauchement des bandes, la largeur de l'enregistrement (Lx) en x du film étant supérieure à la diagonale dudit format pour tenir compte de la rotation d'image en fonction du cap.

12. Indicateur cartographique selon l'une quelconque des revendications précédentes, caractérisé en ce qu'il comporte un lecteur vidéo à tube analyseur à spot mobile (2) pour effectuer le balayage ligne par ligne sur le film, celui-ci étant en couleur et suivi d'un séparateur trichrome (6).

13. Utilisation d'un indicateur cartographique selon l'une quelconque des revendications précédentes dans un ensemble de navigation aérienne pour visualiser la zone survolée sur un indicateur cathodique ainsi que des informations de navigation.

## Claims

1. Map recording cartographical indicator on a photographic film (1) with lateral perforations and supported by coils (13, 14), comprising a video-image reader (2 to 9) according to a line by line scanning, a computer (11) processing from the direction parameters, longitude and latitude of the indicator carrying vehicle, data on the position regulation of the film image to be visualized to control a correction of the scanning signals in function of the direction, and also position regulation in y (15) of the film according to the longitudinal direction by rotation of the coils in function of the latitude and exploitation circuits comprising a cathodic indicator, the computer (11) processing the scanning data which simultaneously takes into account the rotation (θ) which is due to the direction and the translations in x transverse to the film to be produced in function of the longitude, characterized in that the film (1) comprises coded inscription (MB) between the lateral perforations (PF), the said computer (11) controlling also a periodic scanning in y at the position of the lateral perforations (PF) so as to produce the longitudinal position information and to permit the calculation of the repositionning value in Y (SC) to be transmitted to the regulation.

2. Cartographical indicator according to claim 1, characterized in that the coded inscriptions (MB) are coded in the form of transparencies recorded between the perforations (PF) to form after video detection of the lateral scanning a digital word (SP) identifying the precise position in y of the film.

3. Cartographical indicator according to claim 2, characterized in that the video reader comprises at least one detecting channel (9) connected to a threshold detector (16) with a digital output, which is connected via an interface circuit with a buffer memory (17) to the computer (11) for the transmission of the said operating word in y (SP), the computer determining in function of the latitude the true position data in y and calculating the difference in value and sign which constitutes the said repositionning data (SC) applied to the regulation (15) after analog conversion.

4. Cartographical indicator according to any one of the preceeding claims, characterized in that the scanning generator comprises a channel in x and a channel in y each composed of a flip-flop register (30, 31) in series with a buffer memory (32, 33) followed by a digital-analog convector (34, 35) feeding an end amplifier (36, 37).

5. Cartographical indicator according to any one of the preceeding claims, characterized in that it comprises also, repositionning means of the analysis spot by reading test images borne by the film.

6. Cartographical indicator according to claim 5, characterized in that the test images comprise a cross centered on the film and the symmetrical with respect to the median longitudinal direction y of the film.

7. Cartographical indicator according to claim 5, characterized in that the test images comprise a circle centered on the median longitudinal axis of the film.

8. Cartographical indicator according to any one of the preceeding claims, characterized in that it comprises also of linearity control means of the video reader by reading the test images contained in the film.

9. Cartographical indicator according to claim 8, characterized in that the linearity control means comprise test images representing grids.

10. Cartographical indicator according to any one of the preceeding claims, characterized in that the film contains the map recorded in the form of images resulting from the slicing in parallel bands (B1,B2,B3) of the map according to a reference direction (North) with partial overlapping ($\Delta$x) according to their transversal direction.

11. Cartographical indicator according to claim 10, characterized in that the y direction of movement of the film corresponds to the said reference direction of the recorded bands, the image scanned on the film having a width ($\Delta$x) equal to the said overlapping value ($\Delta$x) of the bands, the recorded width of the recording (Lx) in x of the film being superior to the diagonal of the said format so as to take into account the image rotation in function of the direction.

12. Cartographical indicator according to any one of the preceeding claims, characterized in that it comprises a video reader with a mobile spot tube analyzer (2) to operate the scanning of the film line by line, the latter being in color and followed by a trichrome separator (6).

13. Use of cartographical indicator according to any of the preceeding claims in an aerial navigation set to visualize on a cathode indicator the overflown zone as well as navigational informations.

**Ansprüche**

1. Kartographisches Anzeigegerät mit Karten-Aufnahme auf einem photographischen Film (1), der mit seitlichen Perforierungen versehen ist und durch Spulen (13-14) getragen wird, welches folgende Elemente aufweist : ein Video-Bild-Lesegerät (2 bis 9) mit zeilenweiser Abtastung, einen Rechner (11), der anhand der Kurs-, Länge- und Breiteparameter des das Anzeigegerät mitführenden Fahrzeuges Angaben zur Steuerung der Lage des zu visualisierenden Film-Bildes erarbeitet, um eine Korrektur des Abtastungs-Signale in Abhängigkeit des Kurses zu steuern, sowie eine y-Lage-Steuerung (15) des Films in der Längsrichtung durch Drehung der Spulen in Abhängigkeit der Breite und Betriebs-Stromkreise, welche ein kathodisches Anzeigegerät, wobei der Rechner (11), die Abtastungs-Angaben erarbeitet, die gleichzeitig die vom Kurs verursachte Drehung ($\theta$) und die dem Film transversalen x-Verschiebungen, die in Abhängigkeit der Länge zu erzeugen sind, berücksichtigen, dadurch gekennzeichnet, dass der Film (1) verschlüsselte Inschriften (MB) zwischen den seitlichen Perforierungen (PF) aufweist, wobei benannter Rechner (11) zusätzlich eine periodische y-Abtastung an dem Ort steuert, wo sich die seitlichen Perforierungen (PF) befinden, um die longitudinale Lage-Information zu erzeugen und die Errechnung der y-Lagekorrektur Angaben (SC) zu ermöglichen, die der Steuerung zu übermitteln ist.

2. Kartographisches Anzeigegerät nach Anspruch 1, dadurch gekennzeichnet, dass die verschlüsselten Inschriften (MB) in der Form von transparenten Bildern verschlüsselt sind, die zwischen den Perforierungen (PF) aufgenommen werden, um nach Video-Detektierung der seitlichen Abtastung ein numerisches Wort (SP) zu bilden, das die genaue y-Positionierung des Films angibt.

3. Kartographisches Anzeigegerät nach Anspruch 2, dadurch gekennzeichnet, dass das Video-Lesegerät einen Detektor-Weg (9) aufweist, der an einen Schwellen-Detektor (16) mit numerischen Ausgang angeschlossen ist, welcher über einem mit Pufferspeicher (17) Grenzfläche-Kreis mit dem Rechner (11) verbunden ist zur Übermittlung des benannten y-Betriebswortes (SP), wobei der Rechner die wahre Positionierungs-Angabe in Abhängigkeit von der Breite bestimmt und den Betrag und das Zeichen des Unterschiedes errechnet, woraus die benannte Lagerkorrektur-Angabe (SC) besteht, die der Steuerung (15) nach analoger Umwandlung eingegeben wird.

4. Kartographisches Anzeigegerät nach irgend einem der vorherigen Ansprüche, dadurch gekennzeichnet, dass der Abtastungs-Generator einen x-Weg und einen y-Weg aufweist, welcher jeder aus einem Kipp-Register (30, 31) besteht, welcher mit einem Pufferspeicher (32, 33) in Serie geschaltet ist, dem ein Analog-Digital-Umsetzer (34, 35) folgt, der einen End-Verstärker (36, 37) speist.

5. Kartographisches Anzeigegerät nach irgend einem der vorherigen Ansprüche, dadurch gekennzeichnet, dass es zusätzlich Lagerkorrektur-Mitteln des Abtast-Lichtpunkt durch Ablesen von auf dem Film befindlichen Testbildern aufweist.

6. Kartographisches Anzeigegerät nach Anspruch 5, dadurch gekennzeichnet, dass die Testbilder ein Kreuz aufweisen, das auf den Film zentriert und symmetrisch gegen die mittlere longitudinale y-Richtung des Films ist.

7. Kartographisches Anzeigegerät nach Anspruch 5, dadurch gekennzeichnet, dass die Testbilder einen Kreis aufweisen, der auf den Film auf der mittleren longitudinalen Achse zentriert ist.

8. Kartographisches Anzeigegerät nach irgend einem der vorherigen Ansprüche, dadurch gekennzeichnet, dass es zusätzlich Kontrollmitteln der Linearität des Video-Lesegeräts durch Ablesen von auf den Film befindlichen Testbildern aufweist.

9. Kartographisches Lesegerät nach Anspruch 8, dadurch gekennzeichnet, dass die Kontrollmitteln der Linearität Raster darstellenden Testbilder aufweisen.

10. Kartographisches Lesegerät nach irgend einem der vorherigen Ansprüche, dadurch gekennzeichnet, dass der Film die aufgezeichnete Karte in der Form von Bildern aufweist, die sich aus einer Zerlegung der Karte in parallelen Streifen (B1, B2, B3) in einer Bezugsrichtung (NORD) mit teilweiser Überlagerung (Δx) in Richtung ihrer transversalen Richtung ergibt.

11. Kartographisches Anzeigegerät nach Anspruch 10, dadurch gekennzeichnet, dass die y-Filmablaufsrichtung der benannten Bezugsrichtung der gespeicherten Streifen entspricht, wobei das auf dem Film abgetastete Bild eine Breite (Δx) hat, die gleich dem benannten Streifen Überlagerungs-Wert (Δx) ist, wobei die x-Aufnahme-Breite (Lx) des Films grösser als die Diagonale des benannten Formats ist um die Drehung des Bildes in Abhängigkeit vom Kurs zu berücksichtigen.

12. Kartographisches Anzeigegerät nach irgendeinem der vorherigen Ansprüche, dadurch gekennzeichnet, dass es ein Video-Lesegerät mit einer mit bewegbaren Lichtpunktabtaströhre (2) aufweist, um die zeilenweise Abtastung auf dem Film durchzuführen, wobei dieser farbig ist und hinter ihm sich ein Dreifarben-Teiler befindet.

13. Verwendung eines kartographischen Anzeigegeräts nach einem der vorherigen Ansprüche in einer Flugnavigations-Gerätschaft um die überflogene Zone auf einem kathodischen Anzeigegerät zusammen mit Navigations-Informationen zu visualisieren.

FIG_1

FIG_2

FIG_4·a

FIG_4·b

FIG_3

2

FIG_6

FIG_8

FIG_7

FIG_5